(19) Europäisches Patentamt
European Patent Office
Office européen des brevets

(11) **EP 3 242 788 B1**

## (12) EUROPÄISCHE PATENTSCHRIFT

(45) Veröffentlichungstag und Bekanntmachung des Hinweises auf die Patenterteilung:
**06.03.2019 Patentblatt 2019/10**

(21) Anmeldenummer: **15805124.3**

(22) Anmeldetag: **13.11.2015**

(51) Int Cl.:
**B29C 67/00** *(2017.01)* **C08K 3/34** *(2006.01)*

(86) Internationale Anmeldenummer:
**PCT/EP2015/076593**

(87) Internationale Veröffentlichungsnummer:
**WO 2017/020971 (09.02.2017 Gazette 2017/06)**

(54) **VERFAHREN ZUR HERSTELLUNG VON FORMKÖRPERN**

METHOD FOR PRODUCING MOLDED BODIES

PROCÉDÉ DE FABRICATION DE CORPS FAÇONNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2015 DE 102015214883**

(43) Veröffentlichungstag der Anmeldung:
**15.11.2017 Patentblatt 2017/46**

(73) Patentinhaber: **Wacker Chemie AG 81737 München (DE)**

(72) Erfinder: **GOTTSCHALK-GAUDIG, Torsten 84561 Mehring (DE)**

(74) Vertreter: **Bitterlich, Bianca et al Wacker Chemie AG Intellectual Property Hanns-Seidel-Platz 4 81737 München (DE)**

(56) Entgegenhaltungen:
**US-A1- 2005 053 798    US-A1- 2013 337 277**

EP 3 242 788 B1

**Beschreibung**

Die Erfindung betrifft ein generatives Verfahren zur Herstellung von dreidimensionalen Formkörpern, welches dadurch gekennzeichnet ist, dass der Formkörper schrittweise aufgebaut wird, indem das strukturbildende Material in flüssiger Form ortsspezifisch ausgebracht wird, wobei zusätzlich ein zweites Material als Stützmaterial in Bereiche ausgebracht wird, die frei von dem strukturbildenden Material bleiben sollen und nach der Verfestigung des strukturbildenden Materials entfernt wird.

**Stand der Technik**

Generative Fertigungsverfahren stehen für zahlreiche Materialien sowie deren Kombinationen zur Verfügung (z.B. Metalle, Kunststoffe, Keramiken, Gläser).

Für die Herstellung von Formkörpern durch die ortsspezifische Ausbringung eines flüssigen strukturbildenden Materials (sbM) stehen unterschiedliche Verarbeitungsverfahren zur Verfügung. Im Fall hochviskoser oder pastöser sbM können diese in Form einer Raupe mittels einer Düse ausgebracht und ortsspezifisch abgelegt werden. Das Ausbringen durch die Düse kann beispielsweise durch Druck oder durch einen Extruder erfolgen. Ein typisches Beispiel für dieses Verarbeitungsverfahren ist der 3D-Filament-Druck. Ein weiteres bekanntes Verfahren beruht auf der ballistischen Dosierung kleiner Mengen an sbM in Form von Tröpfchen, die mittels Druckköpfen ortsspezifisch ausgebracht werden. Im Fall von niederviskosen, nicht oder kaum scherverdünnenden Tinten wird das Verfahren Inkjet-Printing genannt, bei höherviskosen, scherverdünnenden Materialen ist die Bezeichnung Jetting gebräuchlich.

Voraussetzung aller generativen Herstellverfahren ist die Darstellung der Geometrie sowie ggf. weiterer Eigenschaften (Farbe, Materialzusammensetzung) des gewünschten Formkörpers in Form eines digitalen 3D Datensatzes, welcher als virtuelles Modell des Formkörpers verstanden werden kann (A. Gebhardt, Generative Fertigungsverfahren, Carl Hanser Verlag, München 2013). Diese Modellierung erfolgt vorzugsweise mittels diverser 3D CAD-Konstruktionsverfahren (*computer-aided design*). Als Eingangsdaten für die Erstellung eines 3D CAD-Modells können auch 3D-Messdaten dienen, wie diese z.B. aus CT-Messungen (Computer Tomographie) oder MRT-Messungen (Magnet Resonanz Tomographie) resultieren. Der 3D CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (*slicen*), wobei die optimale Orientierung des Bauteils im Bauraum, Stützstrukturen etc. Berücksichtigung erfahren. Der vollständige Datensatz erlaubt dann die direkte Ansteuerung der für die generative Fertigung eingesetzten Maschine (3D Drucker).

Der Software-Ablauf ist wie folgt:

1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Allen generativen Herstellverfahren mit ortsspezifischer Ausbringung des sbM gemein ist die Notwendigkeit von Stützstrukturen in Bereichen von Hohlräumen, Hinter- und Unterschneidungen bzw. Überhängen, da die ortsspezifische Ausbringung der sbM bis zur Aushärtung des sbM immer einer unterstützenden Oberfläche bedarf. Entsprechende Stützmaterialen (SM) zur Erzeugung von Hilfsstrukturen sind bekannt. US2015/0028523 A1 beschreibt den Einsatz eines thermoplastischen Polymers auf Basis Polyglycolsäure als SM für den Filamentdruck. Nachteilig ist hier, daß das thermoplastische SM auf hohe Temperaturen von 200 °C und höher erwärmt werden muß und zur Entfernung des SM beispielsweise mit wäßriger alkalischer Lösung gearbeitet werden muß.

US2013/0337277 A1 beschreibt den Einsatz strahlenvernetzender Blockcopolymere z. B. auf Basis acrylatisierter Polyethylenglycol-Polycaprolacton-Blockcopolymere als temporäre SM. Durch die Strahlungsvernetzung in Anwesenheit von Wasser entstehen Hydrogele, die durch enzymatische Zersetzung entfernt werden können. Es zeigte sich, daß die Bildung der chemischen Gele durch Vernetzung langsam und der enzymatische Abbau zeitaufwändig ist und eine geeignete Lagerung der eingesetzten Lipasen voraussetzt. Zudem weisen Hydrogele den inhärenten Nachteil auf, daß während des Aufbaus der Zielstruktur, Wasser verdunsten kann und es damit zu einem Schrumpfen der Hilfsstruktur kommen kann.

Dieses Problem tritt auch bei Hydrogelen auf der Basis von partikulären Gelbildnern wie Schichtsilikaten bzw. Kieselsäuren auf. So zeigten Versuche mit wäßrigen Dispersionen von Bentoniten, daß sich hinreichend stabile Gele erzeugen lassen, die anfänglich geeignete Stützstrukturen liefern. Während des Druckprozesses, der unter Umständen einige Stunden dauern kann, kann es jedoch zu einem Formverlust in Folge der Verdunstung von Wasser kommen.

US7368484 beschreibt die Nutzung der Reverse Thermal Gelation zur Bildung von Hilfsstrukturen. Dabei wird die reversible Gelbildung von Copolymeren unter Temperaturerhöhung ausgenützt. Da die Festigkeit dieser Gele jedoch nicht hinreichend ist, wird zusätzlich noch eine partielle Strahlenvernetzung benötigt, was die spätere Entfernung der Hilfsstrukturen erschwert.

Insgesamt kann festgestellt werden, dass kein im Stand der Technik offenbartes Verfahren geeignet ist, um einfache Hilfsstrukturen für generative Fertigungsverfahren mit ortsspezifischer Ausbringung des sbM herzustellen, die sich problemlos wieder entfernen lassen.

Aufgabe der vorliegenden Erfindung war es daher, die Bereitstellung eines generativen (=additiven) Verfahrens zur Herstellung von 3-dimensionalen Formkörpern, welches erlaubt neben der ortsspezifischen Ausbringung des strukturbildenden Materials (sbM) auch ortspezifische Hilfsstrukturen aus Stützmaterial (SM) in einfacher und kostengünstiger Weise sowohl aufzubauen als auch wieder zu entfernen. Dabei soll das SM schnell seine stützenden Eigenschaften ausbilden, die stützenden Eigenschaften während des Verfahrens beibehalten, und anschließend einfach wieder entfernt werden, ohne den Formkörper zu beschädigen oder seine Eigenschaften negativ zu beeinflussen.

Diese Aufgabe wird durch das erfindungsgemäße Verfahren gelöst.

## Das erfindungsgemäße Verfahren

Beim erfindungsgemäßen Verfahren handelt es sich um ein Verfahren zum additiven Aufbau von Formkörpern (8) durch ortsspezifische Ausbringung eines strukturbildenden Materials (sbM)(=6b), dadurch gekennzeichnet, dass gleichzeitig oder zeitlich versetzt mindestens ein Stützmaterial (SM)=(6a) in Bereiche ausgebracht wird, die frei von sbM (6b) bleiben,

wobei das Ausbringen des SM (6a) über eine Vorrichtung erfolgt, die mindestens eine Ausbringeinheit (1a) für das SM (6a) aufweist, die in

x-, y- und z-Richtung mit einer Genauigkeit von mindestens ± 100 μm positioniert werden kann, und somit durch das ortsspezifische Ausbringen des SM (6a) sowohl in der x,y-Arbeitsebene als auch in z-Richtung die Stützstruktur aus SM (6a) für den Formkörper (8) sukzessive aufbaut,

mit der Maßgabe, daß das SM (6a)

- eine strukturviskose, viskoelastische Zusammensetzung ist, enthaltend

> A)mindestens ein Polyether und
> B)mindestens ein partikuläres rheologisches Additiv,
> C)optional weitere Zusatzstoffe

- eine Scherviskosität von höchstens 100 Pas aufweist (gemessen bei 25°C und einer Scherrate von 100 s$^{-1}$),
- einen Strukturrelaxationsparameter von mindestens 1 s aufweist, und
- einen Speichermodul G' von mindestens $5 \times 10^3$ Pa aufweist,

und nach Abschluss des Aufbaus des Formkörpers (8), das SM (6a) aus dem Formkörper (8) entfernt wird.

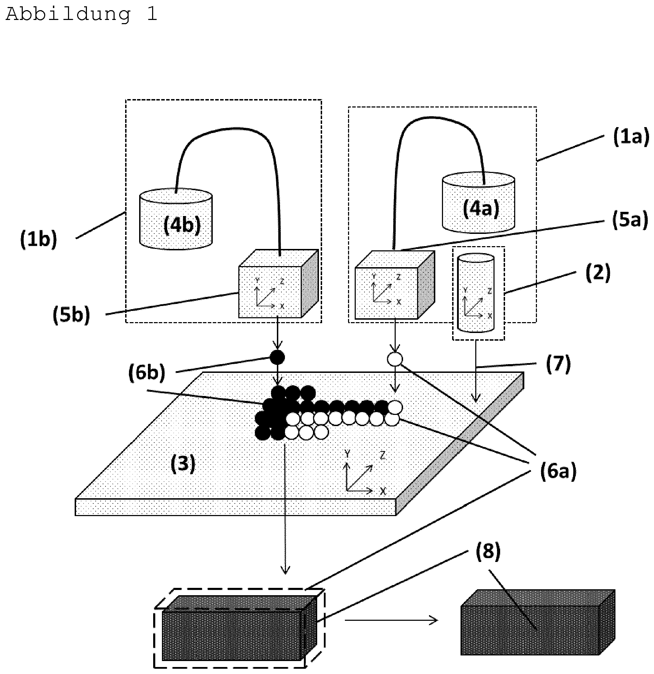

Abbildung 1 zeigt schematisch ein Beispiel wie eine erfindungsgemäße generative Fertigungsanlage aufgebaut sein kann, mit der das erfindungsgemäße Verfahren zur Herstellung von Siliconelastomerteilen (8) mit Hilfsstrukturen (6a) durchgeführt wird. Das strukturviskose viskoelastische SM (6a) befindet sich im Reservoir (4a) eines Einzeldosiersystems (1a), welches mit Druck beaufschlagt ist und über eine Dosierleitung mit einer Dosierdüse (5a) verbunden ist. Dem Reservoir (4a) können Einrichtungen vor- oder nachgeschaltet sein, die es ermöglichen, gelöste Gase durch Evakuieren zu entfernen. Über ein weiteres unabhängig voneinander arbeitendes Einzeldosiersystem (1b) wird das sbM (6b) ausgebracht. (1b) ist ebenfalls ausgestattet mit einem Reservoir (4b), welches über eine Dosierleitung mit einer Dosierdüse (5b) verbunden ist. Auch dem Reservoir (4b) können Einrichtungen vor- oder nachgeschaltet sein, die es ermöglichen, gelöste Gase durch Evakuieren zu entfernen.

Die einzelnen Dosierdüsen (5a) und (5b) können unabhängig voneinander in x-,y- und z-Richtung akkurat positioniert werden, um ein zielgenaues Abscheiden des SM (6a) bzw. des sbM (6b) auf der Basisplatte 3, die vorzugsweise beheizbar ist und ebenfalls in x-, y- und z-Richtung positioniert werden kann, bzw. im späteren Verlauf der Formteilentstehung auf der bereits platzierten SM (6a) bzw. bereits platzierten ggf. bereits vernetzten sbM (6b) zu ermöglichen.

Ferner können eine oder mehrere Strahlungsquellen (2) zur Vernetzung des sbM (6b) vorhanden sein, die vorzugsweise ebenfalls in x-,y- und z-Richtung akkurat positioniert werden können, und mittels Strahlung (7) das sbM (6b) anvernetzen oder ganz vernetzen.

Bevorzugt werden zur Positionierung der Dosierdüsen (5a) und (5b) Verfahr Einheiten mit hoher Wiederholgenauigkeit verwendet. Die zum Positionieren der Dosierdüsen (5a) und (5b) verwendete Verfahr Einheit hat eine

Genauigkeit von mindestens $\pm$ 100 $\mu$m, vorzugsweise von mindestens $\pm$ 25 $\mu$m, jeweils in alle drei Raumrichtungen. Die maximale Geschwindigkeit der verwendeten Verfahr Einheiten bestimmt maßgeblich die Herstellungszeit des Formteils (8) und sollte daher mindestens 0,1 m/s, vorzugsweise mindestens 0,3 m/s, besonders bevorzugt mindestens 0,4 m/s betragen.

Bevorzugt werden Dosierdüsen (5a) und (5b), die ein Jetting flüssiger Medien mittlerer bis hoher Viskosität ermöglichen. Als solche kommen insbesondere (thermische) Bubble-Jet- und Piezo-Druckköpfe in Frage, wobei Piezo-Druckköpfe besonders bevorzugt sind. Letztere ermöglichen das Jetting sowohl niedrigviskoser Materialien, wobei Tropfenvolumen von einigen wenigen Kilolitern (2 Ph entsprechen einem Punktedurchmesser von ca. 0,035 $\mu$m) realisiert werden können, als auch mittel- und hochviskoser Materialien wie der SM (6a), wobei Piezo-Druckköpfe mit einem Düsendurchmesser zwischen 50 und 500 $\mu$m bevorzugt werden und Tropfenvolumen im Nanoliter-Bereich (1 bis 100 Nil) erzeugt werden können. Mit niedrigviskosen Massen (< 100 mPas) können diese Druckköpfe Tröpfchen mit sehr hoher Dosierfrequenz abscheiden (ca. 1 - 30 kHz), während mit höherviskosen Massen (> 100 mPas) in Abhängigkeit von den rheologischen Eigenschaften (scherverdünnendes Verhalten) Dosierfrequenzen bis zu ca. 500 Hz erzielt werden können.

Die zeitliche Abfolge des Aufbaus von Hilfsstrukturen (6a) bzw. Zielstrukturen (6b) ist stark abhängig von der gewünschten Geometrie des Formteils (8). So kann es zielführender oder sogar zwingend nötig sein, zuerst zumindest Teile der Hilfsstrukturen (6a) aufzubauen und anschließend die eigentliche Zielstruktur (6b) zu erzeugen. Es kann aber auch möglich sein, beide Strukturen parallel, d. h. ohne zeitlichen Versatz zu erzeugen, d.h. mittels Paralleldosierung aus zwei unabhängigen Dosiereinrichtungen. Unter Umständen ist zuerst der Aufbau von zumindest Teilen der Zielstruktur (6b) sinnvoller und dann ein nachträglicher zumindest teilweiser Aufbau von Stützstrukturen (6a). Gegebenenfalls ist bei einem Bauteil mit komplexer Geometrie der Einsatz aller möglichen Varianten notwendig.

Im Fall des Ausbringens flüssiger, unverletzter sbM (6b) wie beispielsweise Acrylharze oder Siliconkautschukmassen, müssen diese zur Bildung stabiler Zielstukturen (8) vernetzt werden. Vorzugsweise erfolgt die Vernetzung des Tropfen für Tropfen deponierten sbM (6b) mittels einer oder mehrerer elektromagnetischer Strahlungsquellen (2) (z.B. IR-Laser, IR-Strahler, UV/VIS-Laser, UV-Lampe, LED), die vorzugsweise ebenfalls über eine Verfahrmöglichkeit in x-, y- und z-Richtung verfügen. Die Strahlungsquellen (2) können über Umlenkspiegel, Fokussiereinheiten, Strahlaufweitungssysteme, Scanner, Blenden etc. verfügen. Deponieren und Vernetzen müssen aufeinander abgestimmt werden. Das erfindungsgemäße Verfahren umfasst sämtliche diesbezüglich denkbare Möglichkeiten. Beispielsweise kann es notwendig sein, zunächst einen flächigen Bereich der x,y-Arbeitsebene mit Tropfen der sbM (6b) zu belegen und eine Nivellierung (Ineinanderfließen) abzuwarten, um erst dann diesen Bereich flächig zu bestrahlen und zu vernetzen. Ebenso kann es sinnvoll sein, die aufgebrachte Fläche zwecks Konturierung zunächst nur im Randbereich zu verfestigen und anschließend den Innenbereich durch geeignete Schraffuren anzuvernetzen. Es kann auch notwendig sein, einzelne Tropfen unmittelbar nach deren Platzierung zu vernetzen oder anzuvernetzen, um ein Verlaufen zu verhindern. Es kann zweckmäßig sein, den gesamten Arbeitsbereich während der Formteilbildung permanent zu bestrahlen, um vollständige Vernetzung zu erzielen, oder nur kurzzeitig der Strahlung auszusetzen, um gezielt eine unvollständige Vernetzung (Grünfestigkeit) herbeizuführen, was u.U. mit einer besseren Haftung der Einzelschichten untereinander einhergehen kann. Folglich wird es im Allgemeinen notwendig sein, die das Deponieren und Vernetzen bestimmenden Parameter in Abhängigkeit vom Vernetzungssystem, dem rheologischen Verhalten und den Haftungseigenschaften der sbM (6b) sowie ggf. der übrigen eingesetzten Materialien aufeinander abzustimmen.

Vorzugsweise werden als sbM (6b) flüssige Acrylate, Acrylat-Silicone-Copolymer bzw. deren physikalische Mischungen, acrylfunktionelle Silicone oder reine Siliconkautschukmassen verwendet. Bevorzugt sind die Verwendung von Acrylat-Silicone-Copolymer bzw. deren physikalische Mischungen, acrylfunktionelle Silicone oder reine Siliconkautschukmassen, besonders bevorzugt von acrylfunktionellen Siliconen oder reine Siliconkautschukmassen und in einer speziellen Ausführung von Siliconkautschukmassen, insbesondere von strahlungsvernetzenden Siliconkautschukmassen.

Um eine Verschmutzung der Dosierdüsen zu vermeiden bzw. zu beseitigen, kann die in Abb. 1 gezeigte Anlage durch eine automatisch arbeitende Dosierdüsen-Reinigungsstation ergänzt werden.

Die Einzeldosiersysteme können über eine Temperiereinheit verfügen, um das rheologische Verhalten der Materialien zu konditionieren und/oder die Viskositätserniedrigung durch erhöhte Temperaturen für das Jetting auszunutzen.

Gegebenenfalls kann das Einzeldosiersystem (1a) das SM (6a) auch in Form einer dünnen Raupe, d.h. nach dem Dispensing-Verfahren ausbringen. Insbesondere bei größeren, flächigen Strukturen hat dieses Verfahren Vorteile, z.B. im Hinblick auf die Druckgeschwindigkeit.

Das erfindungsgemäße Verfahren zur Erzeugung von Stützstrukturen (6a) kann mit allen bekannten Verfahren zum additiven Aufbau von Strukturen kombiniert werden, bei denen das strukturbildende Material (sbM) = (6b) in flüssiger Form ortsspezifisch ausgebracht wird. Dazu zählen der Filamentdruck, das Dispensen, Inkjet-Verfahren und das Jetten. Bevorzugt ist das Dispensen und Jetten von mittel- bis hochviskosen, scherverdünnenden flüssigen sbM (6b), besonders bevorzugt ist das Dispensen und Jetten von additionsvernetzenden Siliconeelastomeren und in einer speziellen Ausführung das Jetten von UV-aktivierten oder strahlenvernetzenden Siliconeelastomeren.

Die gesamte beispielhaft in Abbildung 1 skizzierte Anlage kann auch in einer Vakuumkammer oder Inertgaskammer untergebracht sein, z.B. um UV-C-Strahlungsverluste durch Sauerstoff auszuschließen oder Lufteinschlüsse im Formteil zu vermeiden.

Vorzugsweise kann der Druckraum der Anlage oder die gesamte Anlage in einer Kammer zum Ausschluß von Luftfeuchte untergebracht sein, wobei die Kammer entweder von außen mit Trockenluft gespült werden kann oder die Luft in der Kammer durch Umpumpen durch eine Trockeneinheit, wie beispielsweise eine Trocknungspatrone mit Molsieb oder eine Kondensationseinheit, getrocknet wird.

Das im erfindungsgemäßen Verfahren verwendete strukturviskose, viskoelastische SM (6a) besteht vorzugsweise aus folgenden Komponenten:

A) Polyether
B) Partikuläres Rheologieadditiv
C) optionale weitere Zusatzstoffe

Komponente A)

Es werden Polyether, bevorzugt Polyalkylenglycole der allgemeinen Formel (I)

$$R'''\text{-}[(O\text{-}CH_2\text{-}CHR)_n(Z)_k(O\text{-}CH_2\text{-}CHR')_m]\text{-}OR'' \qquad (I)$$

eingesetzt, wobei

R — Wasserstoffatom oder C1 - C4-Kohlenwasserstoffrest, bevorzugt Wasserstoffatom oder Methylrest, und

R' — die gleiche Bedeutung wie R, wobei die Reste R und R' gleich oder verschieden sein können, und

R'' — Wasserstoffatom, ggf. substituierter oder einfach oder mehrfach ungesättigter C1 - C20-Kohlenwasserstoffrest, Arylrest, Acylrest -(O)C-$R^x$ wie Formyl-, Acetyl-, Benzoyl-, Acryl-, Methacryl-, Vinylrest, Glycidoxyrest, Polyalkylenglycolrest wie Polyethylenglycolrest oder Polypropylenglycolrest mit 1 bis 50 Wiederholungseinheiten, und

R''' — die gleiche Bedeutung wie R'', wobei die Reste R'' und R''' gleich oder verschieden sein können, und

$R^x$ — Wasserstoffatom, ggf. substituierter oder einfach oder mehrfach ungesättigter C1 - C20-Kohlenwasserstoffrest oder Arylrest, und

Z — ein Monomer mit mehr als 2 Hydroxylgruppen pro Molekül ist, d.h. eine Verzweigungsstelle, wie beispielsweise 3-wertige Alkohole wie Propantriol oder 4-wertige Alkohole wie 2,2-Bis-(Hydroxymethyl)-1,3-Propandiol, wobei die Hydroxygruppen in den Polyalkylenglycole mit den Alkenglycolmonomeren verethert werden und somit verzweigte Polyalkylenglycole resultieren mit vorzugsweise 3 oder 4 Seitenketten, und

k — 0 oder 1 bedeutet, und

n, m — eine ganze Zahl von 0 bis 1000, bevorzugt 0 - 500 ist, mit der Maßgabe, daß die Summe n + m eine ganze Zahl von 1 bis 1000, bevorzugt von 5 - 500 ist.

Vorzugsweise sind die Polyalkylenglycole linear oder verzweigt, mit 3 oder 4 Seitenketten pro Molekül.

Bevorzugt sind Polyalkylenglycole mit einem Schmelzpunkt kleiner 100°C, bevorzugt kleiner 50°C, besonders bevorzugt sind Polyalkylenglycole, die bei Raumtemperatur (=25°C) flüssig sind. Bevorzugt sind Polyethylenglycole mit einem zahlenmittleren Molekulargewicht (Mn) von 200 g/mol bis 10.000 g/mol. Bevorzugt sind Polypropylenglycole mit e Mn von 200 g/mol bis 10.000 g/mol.

Besonders bevorzugt sind Polyethylenglycole mit einem Mn von ca. 200 g/mol (PEG 200), ca. 400 g/mol (PEG 400), ca. 600 g/mol (PEG 600), ca. 1000 g/mol (PEG 1000).

Besonders bevorzugt sind Polypropylenglycole mit einem Mn von ca. 425 g/mol, ca. 725 g/mol, ca. 1000 g/mol, ca. 2000 g/mol, ca. 2700 g/mol und 3500 g/mol.

Bevorzugt sind lineare Polyethylenglycol-Polypropylenglycol-Copolymerisate mit einem Mn von 200 g/mol bis 100.000 g/mol, besonders bevorzugt mit einem Mn von 1000 g/mol bis 50.000 g/mol, wobei es sich dabei um statistische oder BlockCopolymere handeln kann.

Bevorzugt sind verzweigte Polyethylenglycol-Polypropylenglycol-Copolymerisate mit einem Mn von 200 g/mol bis 100.000 g/mol, besonders bevorzugt mit einem Mn von 1000 g/mol bis 50.000 g/mol, wobei es sich dabei um statistische oder BlockCopolymere handeln kann.

Bevorzugt sind Polyalkylenglycol-monoether, d. h. Polyethylenglycolmonoether, Polypropylenglycolmonoether bzw. Ethylenglycol-Propylenglycol-Copolymer-Monoether mit einem Mn von 1000 g/mol bis 10.000 g/mol und einem Alkyletherrest, wie Methylether, Ethylether, Propylether, Butylether oder ähnliche.

Vorzugsweise können die Polyalkylenglycole rein oder in beliebigen Mischungen eingesetzt werden.

Komponente B)

Als partikuläre Rheologieadditive werden vorzugsweise feste, feinteilige anorganische Partikel eingesetzt. Bevorzugt weisen die partikulären Rheologieadditive eine mittlere Partikelgröße < 1000 nm gemessen mittel Photonen-Korrelationsspektroskopie an geeignet verdünnten wäßrigen Lösungen, insbesondere mit einer mittleren Primärteilchen-Partikelgröße von 5 bis 100 nm auf, bestimmt mittels optischer Bildauswertung an TEM-Aufnahmen. Dabei können diese Primärteilchen nicht isoliert existieren, sondern Bestandteile größerer Aggregate und Agglomerate sein. Bevorzugt sind die partikulären Rheologieadditive anorganische Feststoffe, insbesondere Metalloxide, wobei Kieselsäuren besonders bevorzugt sind. Vorzugsweise weist das Metalloxid eine spezifische Oberfläche von 0,1 bis 1000 $m^2/g$ (gemessen nach der BET Methode nach DIN 66131 und 66132) auf, besonders bevorzugt von 10 bis 500 $m^2/g$.

Das Metalloxid kann Aggregate (Definition nach DIN 53206) im Bereich von Durchmessern 100 bis 1000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Meßbedingungen) Größen von 1 bis 1000 $\mu$m aufweisen kann.

Das Metalloxid ist aus Gründen der technischen Handhabbarkeit vorzugsweise ein Oxid mit kovalentem Bindungs-Anteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder -dioxid, oder ein Oxid der 4. Nebengruppe, wie Titandioxid, Zirkonoxid, oder Hafniumoxid. Andere Beispiele sind stabile Nickel-, Cobalt-, Eisen-, Mangan-, Chrom- oder Vanadiumoxide.

Besonders bevorzugt sind Aluminium(III)-, Titan(IV)- und Silicium(IV)oxide, wie naßchemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere partikuläre Rheologieadditive sind Silikate, Aluminate oder Titanate, oder Aluminiumschichtsilikate, wie Bentonite, wie Montmorillonite, oder Smektite oder Hektorite.

Besonders bevorzugt ist pyrogene Kieselsäure, die in einer Flammenreaktion vorzugsweise aus Siliciumhalogenverbindungen oder Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch in Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Vorzugsweise weisen die Metalloxide und insbesondere die Kieselsäuren eine fraktale Dimension der Oberfläche von vorzugsweise kleiner oder gleich 2,3 auf, besonders bevorzugt von kleiner oder gleich 2,1, im Besonderen bevorzugt von 1,95 bis 2,05, wobei die fraktale Dimension der Oberfläche $D_s$ definiert ist als:

Partikel-Oberfläche A ist proportional zum Partikel-Radius R hoch $D_s$
Die fraktale Dimension der Oberfläche wurde bestimmt mittels Kleinwinkelröntgenbeugung (SAXS).

Vorzugsweise weisen die Metalloxide und insbesondere die Kieselsäuren eine fraktale Dimension der Masse $D_m$ von vorzugsweise kleiner oder gleich als 2,8, bevorzugt gleich oder größer 2,7, besonders bevorzugt von 2,4 bis 2,6 auf. Die fraktale Dimension der Masse $D_m$ ist hierbei definiert als: Partikel-Masse M ist proportional zum Partikel-Radius R hoch $D_m$. Die fraktale Dimension der Masse wurde bestimmt mittels Kleinwinkelröntgenbeugung (SAXS).

Vorzugsweise handelt es sich bei den partikulären Rheologieadditiven B) um unpolare, d. h. oberflächenmodifizierte, insbesondere hydrophobierte, vorzugsweise silylierte feinteilige anorganische Partikel. Bevorzugt sind in diesem Zusammenhang hydrophobe Kieselsäuren, besonders bevorzugt hydrophobe pyrogene Kieselsäuren. Unter hydrophober Kieselsäure sind in diesem Zusammenhang unpolare Kieselsäuren gemeint, die oberflächlich modifiziert, vorzugsweise silyliert sind, wie sie beispielsweise in den Offenlegungsschriften EP 686676 B1, EP 1433749 A1 oder DE 102013226494 A1 beschrieben sind.

Für die erfindungsgemäß eingesetzten Kieselsäuren bedeutet dies, daß die Kieselsäureoberfläche hydrophobiert, d.h. silyliert ist.

Vorzugsweise sind die erfindungsgemäß eingesetzten hydrophoben Kieselsäuren modifiziert, d. h. silyliert mit Organosiliciumverbindungen, wie z.B.

(i) Organosilane bzw. Organosilazane der Formel (II)

$$R^1_d SiY_{4-d} \qquad \text{(II)}$$

und/oder deren Teilhydrolysate,
wobei

R$^1$ gleich oder verschieden sein kann und einen einwertigen, gegebenenfalls substituierten, gegebenenfalls einfach oder mehrfach ungesättigten, gegebenenfalls aromatischen Kohlenwasserstoffrest, mit 1 bis 24 Kohlenstoff-Atomen, der durch Sauerstoffatome unterbrochen sein kann, bedeutet,
d gleich 1, 2 oder 3 bedeutet und
Y gleich oder verschieden sein kann und Halogenatom, einwertige Si-N-gebundene Stickstoffreste, an den ein weiterer Silylrest gebunden sein kann, -OR$^2$ oder -OC(O)OR$^2$ bedeutet, wobei R$^2$ gleich Wasserstoffatom oder ein einwertiger, gegebenenfalls substituierter, gegebenenfalls einfach oder mehrfach ungesättigten Kohlenwasserstoffrest, der durch Sauerstoffatome unterbrochen sein kann, bedeutet,

oder
(ii) lineare, verzweigte oder cyclische Organosiloxane aus Einheiten der Formel (III)

$$R^3_e(_OR^4)_f SiO_{(4-e-f)/2} \qquad \text{(III)},$$

wobei

R$^3$ gleich oder verschieden sein kann und eine der oben für R$^1$ angegebenen Bedeutungen hat,
R$^4$ gleich oder verschieden sein kann und eine für R$^3$ angegebene Bedeutung hat,
e 0, 1, 2 oder 3 ist,
f 0, 1, 2, 3 ist, mit der Maßgabe dass die Summe e+f $\leq$ 3 ist, und die Anzahl dieser Einheiten pro Molekül mindestens 2 ist, oder

Gemische aus (i) und (ii)
eingesetzt werden.

Bei den Organosiliciumverbindungen, die zur Silylierung der Kieselsäuren eingesetzt werden können, kann es sich beispielsweise um Gemische aus Silanen oder Silazanen der Formel (II) handeln, wobei solche aus Methyl-Chlorsilanen einerseits oder Alkoxysilanen und gegebenenfalls Disilazanen andererseits bevorzugt sind.

Beispiele für R$^1$ in Formel (II) sind vorzugsweise der Methyl-, Octyl-, Phenyl- und Vinylrest, besonders bevorzugt sind der Methylrest und der Phenylrest.

Beispiele für R$^2$ sind vorzugsweise der Methyl-, der Ethyl-, der Propyl und der Octylrest, wobei der Methyl- und der Ethylrest bevorzugt sind.

Bevorzugte Beispiele für Organosilane der Formel (II) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacethoxysilan, Dimethyldiacethoxysilan und Trimethylacethoxysilan, Phenylsilane, wie Phenyltrichlorsilan, Phenylmethyldichlorsilan, Phenyldimethylchlorsilan, Phenyltrimethoxysilan, Phenylmethyldimethoxysilan, Phenyldimethylmethoxysilan, Phenyltriethoxysilan, Phenylmethyldiethoxysilan und Phenyldimethylethoxysilan, Vinylsilane, wie Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Besonders bevorzugt ist Methyltrichlorsilan, Dimethyldichlorsilan und Trimethylchlorsilan oder Hexamethyldisilazan.

Bevorzugte Beispiele für Organosiloxane der Formel (III) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacethoxysiloxy-, Methyldiacethoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPa·s.

Die erfindungsgemäß eingesetzten hydrophoben Kieselsäuren weisen eine Silanolgruppendichte von vorzugsweise kleiner 1,8 Silanolgruppen pro $nm^2$, bevorzugt von höchstens 1,0 Silanolgruppen pro $nm^2$ und besonders bevorzugt von höchstens 0,9 Silanolgruppen pro $nm^2$ auf.

Die erfindungsgemäß eingesetzten hydrophoben Kieselsäuren weisen einen Kohlenstoffgehalt von vorzugsweise größer oder gleich 0,4 Gew.% Kohlenstoff , bevorzugt 0,5 Gew.% bis 15 Gew.% Kohlenstoff und besonders bevorzugt 0,75 Gew% bis 10 Gew.% Kohlenstoff auf, wobei das Gewicht auf die hydrophobe Kieselsäure bezogen ist.

Die erfindungsgemäß eingesetzten hydrophoben Kieselsäuren weisen eine Methanolzahl von vorzugsweise mindestens 30, bevorzugt von mindestens 40 und besonders bevorzugt von mindestens 50 auf.

Die erfindungsgemäß eingesetzten hydrophoben Kieselsäuren weisen vorzugsweise eine DBP-Zahl (Dibutylphthalatzahl) von kleiner 250 g/100 g, bevorzugt 150 g/100g bis 250 g/100g auf.

Die erfindungsgemäß eingesetzten hydrophoben Kieselsäuren weisen vorzugsweise eine Stampfdichte gemessen gemäß DIN EN ISO 787-11 von 20 g/l - 500 g/l, bevorzugt von 30 - 200 g/l auf.

Die Silanolgruppendichte wird mittels Säure-Base-Titration bestimmt, wie beispielsweise in G.W. Sears, Anal. Chem. 1956, 28, 1981 offenbart.

Der Kohlenstoffgehalt kann durch Elementaranalyse bestimmt werden.

Die Methanolzahl ist der prozentuale Anteil von Methanol, welcher der Wasserphase zugesetzt werden muß, um vollständige Benetzung der Kieselsäure zu erreichen. Vollständige Benetzung bedeutet dabei ein vollständiges Einsinken der Kieselsäure in der Wasser-Methanol-Testflüssigkeit zu erreichen.

Die analytischen Methoden zur Charakterisierung der Komponente B) werden zudem weiter unten im Beispielteil genauer ausgeführt.

Als partikuläres Rheologieadditiv B) können beliebige Mischungen feinteiliger anorganischer Partikel eingesetzt werden, insbesondere können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlicher Silylierung oder Mischungen aus unmodifizierten und silylierten Kieselsäuren.

Bevorzugt ist bei Mischungen aus silylierten, d. h. hydrophoben, unpolaren Kieselsäuren und unmodifizierten, d. h. hydrophilen, polaren Kieselsäuren der Anteil der hydrophoben Kieselsäuren an der Gesamtkieselsäuremenge mindestens 50 Gewichtsprozent (Gew.-%), bevorzugt mindestens 80 Gew.-% und besonders bevorzugt mindestens 90 Gew.-%.

Die unmodifizierten, d. h. hydrophilen, polaren Kieselsäuren weisen vorzugsweise eine spezifische Oberfläche von 0,1 bis 1.000 $m^2/g$ (gemessen nach der BET Methode nach DIN 66131 und 66132) auf, besonders bevorzugt von 10 bis 500 $m^2/g$.

Die unmodifizierten, d. h. hydrophilen, polaren Kieselsäuren weisen eine Silanolgruppendichte von vorzugsweise 1,8 Silanolgruppen pro $nm^2$ bis 2,5 Silanolgruppen pro $nm^2$, bevorzugt 1,8 Silanolgruppen pro $nm^2$ bis 2,0 Silanolgruppen pro $nm^2$ auf.

Die unmodifizierten, d. h. hydrophilen, polaren Kieselsäuren weisen eine Methanolzahl von kleiner 30, bevorzugt kleiner 20, besonders bevorzugt kleiner 10 und in einer speziellen Ausführung werden die unmodifizierten, d. h. hydrophilen, polaren Kieselsäuren ohne Zusatz von Methanol vollständig von Wasser benetzt.

Die unmodifizierten, d. h. hydrophilen, polaren Kieselsäuren weisen eine Stampfdichte gemessen gemäß DIN EN ISO 787-11 von 20 g/l - 500 g/l, bevorzugt von 30 - 200 g/l auf und besonders bevorzugt von 30 - 150 g/l auf.

Die erfindungsgemäß eingesetzten unmodifizierten, d. h. hydrophilen, polaren Kieselsäuren weisen vorzugsweise eine DBP-Zahl (Dibutylphthalatzahl) von kleiner 300 g/100 g, bevorzugt 150 g/100 g bis 280 g/100g auf.

Weitere Zusatzstoffe C)

Das erfindungsgemäße SM (6a) kann weitere funktionale Zusatzstoffe enthalten, wie beispielsweise

- Farbmittel, wie organische oder anorganische Farbpigmente oder molekular lösliche Farbstoffe;
- industriell übliche Lösungsmittel, wie Wasser, Aceton, Alkohole, aromatische oder aliphatische Kohlenwasserstoffe;
- Stabilisatoren, wie Hitze- oder UV-Stabilisatoren;
- UV-Tracer, wie Fluoreszenz-Farbstoffe, wie z.B. Rhodamine, Fluoresceine oder andere zum Nachweis von SM-Restspuren auf Bauteilen
- Polymere, wie polymere Rheologieadditive oder Verlaufshilfsmittel;
- Füllstoffe, wie nichtverstärkende Füllstoffe, wie zum Beispiel Füllstoffe mit einer BET-Oberfläche von bis zu 50 $m^2/g$, wie Quarz, Diatomenerde, Calciumsilikat, Zirkoniumsilikat, Zeolithe, Aluminiumoxid, Titanoxid, Eisenoxid, Zinkoxid, Bariumsulfat, Calciumcarbonat, Gips, Siliciumnitrid, Siliciumcarbid, Schichtsilikate, wie Glimmer, Montmorillionite, Bornitrid, Glas- und Kunststoffpulver
- Wasserfänger bzw. Trockenmittel, wie beispielsweise Molsiebe oder hydratisierbare Salze wie wasserfreies $Na_2SO4$, mit einer mittleren Partikelgröße kleiner 500 $\mu m$, bevorzugt kleiner 100 $\mu m$.

Das erfindungsgemäße SM (6a)

Das erfindungsgemäße SM (6a) ist zusammengesetzt aus 50Gew.-% - 99 Gew.-% A), 1 Gew.-% - 50 Gew.-% B) und 0 Gew.-% - 25 Gew.-% C), bevorzugt ist das erfindungsgemäße SM (6a) zusammengesetzt aus 70 Gew.-% - 95 Gew.-% A), 5 Gew.-% - 30 Gew.-% B) und 0 Gew.-% - 10 Gew.-% C).
Das erfindungsgemäße SM (6a) ist insbesondere dadurch gekennzeichnet, daß es strukturviskose und viskoelastische Eigenschaften aufweist.

Insbesondere weist das erfindungsgemäß eingesetzte SM (6a) strukturviskose Eigenschaften auf, d.h. die Viskosität $\eta(\dot{\gamma})$ des SM (6a) ist abhängig von der Scherrate $\dot{\gamma}$ und sinkt mit zunehmender Scherrate, wobei dieser Effekt reversibel ist und bei abnehmender Scherrate die Viskosität wieder zunimmt.

Insbesondere weist das erfindungsgemäß eingesetzte SM (6a) eine hohe Viskosität bei niedriger Scherrate auf. Vorzugsweise hat die Viskosität, gemessen bei einer Scherrate von 1 s-1 bei 25 °C einen Wert größer 100 Pas, bevorzugt einen Wert zwischen 100 Pas und 10000 Pas, besonders bevorzugt zwischen 100 Pas und 1000 Pas.
Insbesondere weist das erfindungsgemäß eingesetzte SM (6a) eine niedrige Viskosität bei hoher Scherrate auf. Vorzugsweise hat die Viskosität, gemessen bei einer Scherrate von 100 s-1 bei 25 °C einen Wert kleiner 100 Pas, bevorzugt einen Wert zwischen 0,1 Pas und 50 Pas, besonders bevorzugt zwischen 1 Pas und 50 Pas.
Die Methode zur Bestimmung der Viskosität (=Scherviskosität) wird weiter unten bei den Beispielen exakt beschrieben. Insbesondere weist das erfindungsgemäß eingesetzte SM (6a) thixotropes Verhalten auf, d. h. beispielsweise, daß der Anstieg der Scherviskosität nach Verringerung der Scherrate zeitabhängig ist. Das Verhalten läßt sich mittels eines Struktur-Relaxationsparameter $R^{90}(1000;0,01)$ beschreiben. Dieser entspricht der Zeit, bis die Scherviskosität, nach Beenden einer Hochscherphase mit einer Scherrate von 1000 s$^{-1}$, 90% des Viskositätsmaximalwertes der nachfolgenden Ruhephase mit einer Scherrate von 0,01 s$^{-1}$ erreicht hat. $R^{90}(1000;0,01)$ hat einen Wert von besonders bevorzugt 1 s bis 50 s.
Vorzugsweise erfolgt der Wiederaufbau der Viskosität in Form einer konkaven Kurve, d. h. einer rechtsgekrümmten Kurve.
Vorzugsweise weist die konkave Viskositätsaufbaukurve eine kontinuierliche Abnahme der Steigung d$\eta$/dt auf. Dies bedeutet, daß die mittlere Steigung im ersten Drittel der Kurve $\overline{(\mathrm{d}\eta/\mathrm{dt})_1}$ größer ist als die mittlere Steigung der Kurve im zweiten Drittel der Kurve $\overline{(\mathrm{d}\eta/\mathrm{dt})_2}$ und die mittlere Steigung im zweiten Drittel der Kurve $\overline{(\mathrm{d}\eta/\mathrm{dt})_2}$ größer ist als die mittlere Steigung der Kurve im dritten Drittel der Kurve $\overline{(\mathrm{d}\eta/\mathrm{dt})_3}$, wobei das Gesamtzeitintervall der Kurve durch den Betrag des Struktur-Relaxationsparameter $R^{90}(1000;0,1)$gegeben ist.

Vorzugsweise ist der Quotient $\overline{(\mathrm{d}\eta/\mathrm{dt})_1}/\overline{(\mathrm{d}\eta/\mathrm{dt})_3}$ größer als 1, besonders bevorzugt größer als 1,5 und in einer speziellen Ausführung größer als 2.

Das erfindungsgemäß eingesetzte SM (6a) ist ferner dadurch gekennzeichnet, daß es viskoelastisches Verhalten aufweist und insbesondere viskoelastische Festkörpereigenschaften im linearviskoelastischen (LVE) Bereich aufweist. Dies bedeutet, daß im LVE-Bereich, definiert gemäß T. Mezger, G., The Rheology Handbook, 2. ed., Vincentz Network GmbH & Co. KG; Germany, 2006, 147ff., der Verlustfaktor tan$\delta$ = G"/G' einen Wert kleiner 1, bevorzugt kleiner 0,5 und besonders bevorzugt kleiner 0,25 hat.

Das erfindungsgemäß eingesetzte SM (6a) ist ferner dadurch gekennzeichnet, daß es sich um ein stabiles physikalisches Gel handelt. Dies bedeutet, daß der Plateau-Wert des Speichermoduls G' im LVE-Bereich bei 25 °C einen Wert größer $5 \times 10^3$ Pa und bevorzugt größer $1 \times 10^4$ Pa und besonders bevorzugt größer $2 \times 10^4$ Pa hat.
Ferner ist das Gel dadurch charakterisiert, daß die kritische Fließspannung $\tau_{krit}$, das heißt, die Spannung $\tau$ bei der G' = G" ist, einen Wert von größer 1 Pa, bevorzugt größer 5 Pa und besonders bevorzugt größer 25 Pa hat.

Vorzugsweise verhält sich das erfindungsgemäß eingesetzte SM (6a) thermo-rheologisch einfach in einem Temperaturbereich von 20 °C bis 200 °C, bevorzugt in einem Temperaturbereich von 25 °C bis 150 °C und besonders bevorzugt in einem Temperaturbereich von 25 °C bis 100 °C, mit der Maßgabe, daß der untere Wert des Temperaturbereichs mindestens 5 °C oberhalb des Erweichungsbereichs des eingesetzten Polyethers liegt. Dies bedeutet, daß das erfindungsgemäß eingesetzte SM (6a) in diesem Temperaturbereich keine Änderungen des Charakters der Struktur aufweist, z. B. keinen Übergang von einem viskoelastischen Festkörper zu einer viskoelastischen Flüssigkeit aufweist.

Dies bedeutet insbesondere, daß die Temperaturabhängigkeit der Scherviskosität mittels eines Arrhenius-Plots beschrieben werden kann, wobei auf der y-Achse der natürliche Logarithmus der Scherviskosität (ln $\eta$) und auf der x-Achse die reziproke absolute Temperatur (1/T [K$^{-1}$]) aufgetragen werden. Mittels linearer Regression läßt sich aus der Steigung die Aktivierungsenergie des Fließprozesses bestimmten. Vorzugsweise liegt die Aktivierungsenergie des Fließprozesses des erfindungsgemäß eingesetzten SM (6a) für eine Scherrate von 10 s-1 im Bereich von 1 bis 100 kJ/mol, bevorzugt im Bereich von 5 bis 50 kJ/mol und besonders bevorzugt im Bereich von 10 bis 30 kJ/mol.

Vorzugsweise zeigt das erfindungsgemäß eingesetzte SM (6a) im technisch relevanten Temperaturbereich keine Änderung des Strukturcharakters, also z.B. keinen Übergang von einem viskoelastischen Festkörper zu einer viskoelastischen Flüssigkeit. Dies bedeutet insbesondere, daß der Wert des Verlustfaktors tan $\delta$ im Temperaturbereich

von 20 °C bis 200 °C, bevorzugt im Temperaturbereich von 20 °C bis 150 °C und besonders bevorzugt Temperaturbereich von 20 °C bis 100 °C kleiner 1 ist.

Dies bedeutet ferner, daß der Plateau-Wert des Speichermoduls G' im LVE-Bereich im Temperaturbereich von 20 °C bis 200 °C, bevorzugt im Temperaturbereich von 20 °C bis 150 °C und besonders bevorzugt im Temperaturbereich von 20 °C bis 100 °C einen Wert größer $5x10^2$ Pa, bevorzugt größer $1x10^3$ Pa und besonders bevorzugt größer $5x10^3$ Pa hat.

Dies bedeutet ferner, daß die kritische Fließspannung $\tau_{krit}$, das heißt, die Spannung $\tau$ bei der G' = G" ist, im Temperaturbereich von 20 °C bis 200 °C, bevorzugt im Temperaturbereich von 20 °C bis 150 °C und besonders bevorzugt im Temperaturbereich von 20 °C bis 100 °C einen Wert von größer 1 Pa, bevorzugt größer 5 Pa und besonders bevorzugt größer 10 Pa hat.

Das erfindungsgemäß eingesetzte SM (6a) ist ferner dadurch gekennzeichnet, daß Silicone auf der Oberfläche der SM (6a) spreiten können. Dies bedeutet, daß der Kontaktwinkel eines niedermolekularen Siliconeöls (z.B. AK 100 der Wacker Chemie AG) einen Wert kleiner 90°, bevorzugt kleiner 60° und besonders bevorzugt spontan das SM ohne Ausbildung eines meßbaren Kontaktwinkels benetzt.

Das erfindungsgemäß eingesetzte SM (6a) ist ferner dadurch gekennzeichnet, daß es sich bei kurzzeitiger Bestrahlung mit elektromagnetischer Strahlung, wie z. B. mit UV-Licht im Rahmen der Strahlungsvernetzung des sbM (6b), nicht verändert, d.h. keine Abbaureaktionen, Polymerisationen oder Verlust an Gelstabilität aufweist.

Das erfindungsgemäß eingesetzte SM (6a) ist insbesondere dadurch gekennzeichnet, daß es sich nach Aushärten des sbM (6b) leicht vom Formkörper (8) mechanisch oder durch Lösen in einem Lösungsmittel entfernen läßt. Dies kann mechanisch z.B. mittels Druckluft, Abschleudern z. B. mittels Zentrifuge, Bürsten, Schabern oder Ähnlichem erfolgen. Ferner kann das Entfernen durch Lösen in einem geeigneten Lösungsmittel erfolgen. Bevorzugt sind dabei umweltfreundliche und für den Endanwender unbedenkliche Lösungsmittel, vorzugsweise Wasser. Gegebenenfalls kann das Lösungsmittel dazu erwärmt werden und / oder insbesondere dem Wasser geeignete Tenside wie anionische, kationische oder neutrale Tenside zugesetzt werden. Gegebenenfalls kann das Waschen maschinell erfolgen, beispielsweise in einer geeigneten Spülmaschine.

Vorzugsweise wird das erfindungsgemäß eingesetzte SM (6a) nach dem Entfernen vom Formkörper (8) recycelt. Dazu hat es sich als vorteilhaft erwiesen, wenn das erfindungsgemäß eingesetzte SM (6a) eine geringe Absorptionskapazität an flüchtigen Bestandteilen des sbM (6b) wie beispielsweise niedermolekulare Siloxane im Fall von Silicone-Elastomeren als sbM (6b) hat.

Bei der Herstellung der SM-Dispersionen, die partikuläre Rheologieaddtive B) enthalten, werden die partikulären Rheologieaddtive B) in den Polyether A) eingemischt.

Die partikulären Rheologieaddtive B) können zur Herstellung der SM-Dispersionen in die Flüssigkeit A) zugegeben werden und durch Benetzung verteilt, oder durch Schütteln, wie mit einem Taumelmischer, oder einem High Speed Mixer, oder durch Rühren vermischt werden. Bei geringen Partikelkonzentrationen unter 10 Gew.% reicht im Allgemeinen einfaches Rühren zur Einarbeitung der Partikel B) in die Flüssigkeit A). Bevorzugt ist das Einarbeiten und Dispergieren der Partikel B) in die Flüssigkeit A) bei sehr hohem Schergefälle. Hierfür sind vorzugsweise schnelllaufende Rührer, schnelllaufende Dissolver, z.B. mit Umlaufgeschwindigkeiten von 1-50 m/s, schnelllaufende Rotor-Stator Systeme, Sonolatoren, Scherspalte, Düsen, Kugelmühlen und andere geeignet.

Dies kann in diskontinuierlichen und in kontinuierlichen Verfahren erfolgen, bevorzugt sind kontinuierliche Verfahren. Im Besonderen geeignet sind Systeme, die zunächst mit effektiven Rührorganen die Benetzung und Einarbeitung der partikulären Rheologieaddtive B) in die Flüssigkeit A) erzielen, z.B. in einem geschlossenen Behältnis oder Kessel, und in einem zweiten Schritt die partikulären Rheologieaddtive B) bei sehr hohem Schergefälle dispergieren. Dies kann durch ein Dispergiersystem in dem ersten Behältnis geschehen, oder durch Umpumpen in externe Rohrleitungen, die ein Dispergierorgan enthält aus dem Behältnis unter bevorzugt geschlossener Rückführung in das Behältnis. Durch eine teilweise Rückführung, und teilweise kontinuierliche Entnahme kann dieser Prozess bevorzugt kontinuierlich gestaltet werden. Insbesondere geeignet ist zur Dispergierung der partikulären Rheologieaddtive B) in der SM-Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflußsysteme, die, gegebenenfalls durch eine Rohrleitung oder Rohrwand abgetrennter Systeme, einen oder mehrere Ultraschallgeber enthalten. Ultraschalldispergierung kann kontinuierlich oder diskontinuierlich erfolgen.

Das Dispergieren kann in üblichen, zur Herstellung von Emulsionen bzw. Dispersionen geeigneten Mischgeräten, die einen ausreichend hohe Eintrag von Scherenergie leisten, wie beispielsweise schnelllaufende Stator-Rotor-Rührgeräte, wie z. B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral erfolgen. Andere Verfahren sind Ultraschallverfahren wie US Finger/Geber, oder US Durchflußzellen, oder US Systeme oder analog wie von Sonorex /Bandelin angeboten, oder Kugelmühlen, wie z.B. Dyno-Mill von WAB, CH. Weitere Verfahren sind schnelllaufende Rührer, wie Flügelrührer oder Balkenrührer, Dissolver wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Vorzugsweise erfolgt das Einarbeiten und Dispergieren der partikulären Rheologieadditive B) unter Vakuum oder beinhaltet einen Evakuierungsschritt.

Vorzugsweise erfolgt das Einarbeiten und Dispergieren der partikulären Rheologieadditive B) bei erhöhter Temperatur in einem Temperaturbereich von 25 °C bis 200 °C, bevorzugt 25 °C bis 150 °C und besonders bevorzugt 25 °C bis 100 °C. Vorzugsweise kann der Temperaturanstieg durch externes Heizen bzw. Kühlen gesteuert werden. Selbstverständlich kann die SM-Dispersion auch auf andere Weise hergestellt werden. Es hat sich jedoch gezeigt, dass die Verfahrensweise kritisch ist und nicht alle Herstellungsarten erfindungsgemäß einsetzbare SM (6a) ergeben.

Vorzugsweise werden die erfindungsgemäß eingesetzten SM (6a) in geeignete Dosierbehälter (4a) abgefüllt, wie Kartuschen, Schlauchbeutel oder ähnliche. Bevorzugt werden die Dosierbehälter (4a) anschließend durch Einschweißen z.B. in metallisierte Folie, vor Zutritt von Luftfeuchte geschützt.

Vorzugsweise werden die erfindungsgemäß eingesetzten SM (6a) vor und/oder während der Abfüllung entgast, beispielsweise durch Anlegen eines geeigneten Vakuums oder mittels Ultraschall.

Vorzugsweise werden die erfindungsgemäß eingesetzten SM (6a) vor der Abfüllung getrocknet, beispielsweise durch Anlegen eines geeigneten Vakuums bei erhöhter Temperatur.

Der Gehalt an freiem Wasser im eingesetzten SM (6a), d. h. Wasser, das nicht an Wasserfänger oder Trockenmittel gebunden wurde, beträgt kleiner 10 Gew.-%, bevorzugt kleiner 5 Gew.-%, besonders bevorzugt kleiner 1 Gew.-%. Der Gehalt an freiem Wasser kann beispielsweise mittels Karl-Fischer-Titration oder NMR-Spektroskopie quantitativ bestimmt werden.

Vorzugsweise werden die erfindungsgemäß eingesetzten SM (6a) aus den Dosierbehältern durch mechanischen Druck bzw. mittels Luftdruck oder Vakuum ausgebracht.

**Beispiele**

Die folgenden Beispiele dienen der Erläuterung der vorliegenden Erfindung ohne diese zu beschränken.

Alle Prozentangaben beziehen sich auf das Gewicht. Falls nicht anders angegeben, werden alle Manipulationen bei Raumtemperatur von 25°C und unter Normaldruck (1,013 bar) ausgeführt. Bei den Apparaten handelt es sich um handelsübliche Laborgeräte wie sie von zahlreichen Geräteherstellern käuflich angeboten werden.

**Analytische Methoden zur Charakterisierung der Kieselsäuren (Komponente B)**

Methanolzahl

Test der Benetzbarkeit mit Wasser-Methanol Gemischen (Volumen% MeOH in Wasser): Einschütteln eines gleichen Volumens der Kieselsäure mit gleichem Volumen an Wasser-Methanol Gemisch

- Start mit 0% Methanol
- bei Nicht-Benetzung schwimmt zumindest ein Teil der Kieselsäure auf: Es ist ein Gemisch mit um 5 Vol% höherem MeOH-Anteil zu verwenden
- bei Benetzung sinkt das gesamte Volumen der Kieselsäure ein: Anteil MeOH (Vol%) in Wasser gibt die Methanolzahl.

Kohlenstoffgehalt (%C)

Die Elementaranalyse auf Kohlenstoff erfolgte nach DIN ISO 10694 unter Verwendung eines CS-530 Elementaranalysators der Firma Eltra GmbH (D-41469 Neuss).

Rest-Silanolgehalt

Die Bestimmung des Rest-Silanolgehalts erfolgte analog G. W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann demnach nach folgender Formel errechnet werden:

$$SiOH = SiOH(silyl)/SiOH(phil)\ 100\%$$

mit

SiOH(phil): Titrationsvolumen aus der Titration der unbehandelten Kieselsaure

SiOH(silyl): Titrationsvolumen aus der Titration der silylierten Kieselsaure

DBP-Zahl

Die Dibutylphthalatabsorption wird gemessen mit einem Gerät RHEOCORD 90 der Fa. Haake, Karlsruhe. Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) $\times$ 100.

BET-Oberfläche

BET-Oberfläche wird gemäß DIN 66131 (mit Stickstoff) bestimmt.

Rheologische Messungen

Alle Messungen wurden auf einem Rheometer MCR 302 mit Luftlagerung der Firma Anton Paar bei 25 °C, sofern nicht anders genannt, durchgeführt. Es wurde mit Platte-Platte-Geometrie (25 mm) bei einer Spaltweite von 300 $\mu$m gemessen. Überschüssiges Probenmaterial wurde nach Anfahren des Meßspaltes mittels Holzspatel entfernt (s. g. Trimmen). Vor dem Start des eigentlichen Meßprofils wurde die Probe einer definierten Vorscherung unterworfen um die rheologische Historie aus Probenauftrag und Anfahren der Meßposition zu beseitigen. Die Vorscherung umfaßte eine Scherphase von 60 s bei Scherrate von 100 s-1 gefolgt von einer Ruhephase von 300 s.

Die Scherviskositäten wurden aus einem sogenannten Stufenprofil ermittelt, bei dem die Probe jeweils für 120 s bei einer konstanten Scherrate von 1 s$^{-1}$, 10 s$^{-1}$ und 100 s$^{-1}$ geschert wurde. Die Meßpunktsdauer betrug dabei 12 s (1 s$^{-1}$) bzw. 10 s (10 s$^{-1}$, 100 s$^{-1}$) und als Scherviskosität wurde der Mittelwert der letzten 4 Datenpunkte eines Blocks herangezogen.

Der Struktur-Relaxationsparameter R$^{90}$(1000;0,01) bzw. der Quotient $\overline{(d\eta/dt)_1}/\overline{(d\eta/dt)_3}$ wurden aus einem Scherraten-Sprungversuch ermittelt. Dabei wird die Probe zuerst für 60 s bei einer Scherrate von 0,01 s-1 (Meßpunktsdauer 10 s), dann für 0,5 s bei einer Scherrate von 1000 s-1 (Meßpunktsdauer 0,05 s) und anschließend für 240 s bei 0,01 s-1 (Meßpunktsdauer 1 s) geschert.

Der Plateauwert des Speichermoduls G', der Verlustfaktor tan $\delta$ und die kritische Schubspannung $\tau_{krit}$ wurden aus einem dynamischen Deformationsversuch erhalten, bei dem die Probe bei einer konstanten Kreisfrequenz von 10 rad/s mit zunehmender Deformationsamplitude unter Deformationsvorgabe im Deformationsbereich von 0,01 bis 100 belastet wurde. Meßpunktsdauer war 30 s mit 4 Meßpunkten pro Dekade. Der Plateau-Wert des Speichermoduls G' ist dabei der Mittelwert der Datenpunkte 2 bis 7 mit der Maßgabe, daß diese im linearviskoelastischen Bereich liegen, d.h. keine Abhängigkeit von der Deformation bzw. Schubspannung aufweisen.

Als Wert für den Verlustfaktor tan $\delta$ wurde der Wert beim 4. Meßpunkt gewählt.

**3D-Drucker:** Für die nachfolgend beschriebenen Beispiele des erfindungsgemäßen Verfahrens wurde als generative Fertigungsanlage ein "NEO-3D-Drucker" der Firma "German RepRap GmbH" verwendet, welcher für die Versuche umgebaut und angepasst wurde. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäß eingesetzten SM tröpfchenweise abscheiden zu können.

Weil der "NEO"-Drucker für die Installation von Jetting-Düsen nicht standardmäßig ausgerüstet war, wurde er modifiziert.

Die Vermes-Jetting-Düse wurde so in die Drucker-Steuerung eingebunden, daß das Start-Stop-Signal (Triggersignal) der Vermes-Jetting-Düse von der GCode-Steuerung des Druckers betätigt wurde. Dazu wurde in der GCode-Steuerung ein spezielles Signal hinterlegt. Die GCode-Steuerung des Computers schaltete damit lediglich die Jetting-Düse ein und aus (Start- und Stop der Dosierung). Für die Signalübertragung des Start-Stop-Signals wurde das Heizkabel der ursprünglich installierten Filament-Heizdüse des "NEO"-Druckers getrennt und (über ein Relais, evtl. weglassen) mit der Vermes-Düse verbunden.

Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repitier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO" 3D Druckers beträgt 0,3 m/s.

**Dosiersystem:** Als Dosiersystem für die verwendeten SM-Massen bzw. das strahlungsvernetzende Silicone-Elastomer-Strukturmaterial diente das Microdispensing-Dosiersystem "MDV 3200 A" der Firma "Vermes Microdispensing GmbH", bestehend aus einem Komplettsystem mit folgenden Komponenten: a) MDV 3200 A - Düseneinheit mit einem Anschluss für Luer-Lock Kartuschen, welche an der Kartuschen-Oberseite mit 3-8 bar Druckluft (Schlauch mit Adapter) beaufschlagt wurden, b) Vermes Begleit-Düsenheizungs-System MDH-230tfl links, c) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 µm zur Verfügung. Damit können feinste SM-Tröpfchen (6a) im Nanoliter-Bereich auf jeder beliebigen xyz-Position der Basisplatte bzw. des vernetzten sbM (6b) punktgenau platziert werden. Sofern bei den einzelnen Beispielen nichts anderes angegeben ist, war in dem Vermes-Ventil als Standard-Düseneinsatz eine 200 µm-Düse eingebaut (Düseneinsatz N11-200). Als Vorratsbehälter (4a) für die SM-Masse (6b) dienten senkrecht stehende 30 ml Luer-Lock Kartuschen, die flüssigkeitsdicht an die Dispensing-Düse aufgeschraubt und mit Druckluft beaufschlagt wurden. Die Steuerung des modifizierten "NEO"-3D-Druckers und des "Vermes"-Dosiersystems erfolgte mit einem PC und einer Open-Source-Software "Simplify 3D".

**Strahlungsquelle:**

**UV-Kammer mit Osram-UV-Lampe**

Für Offline-UV-Bestrahlung zur Vernetzung der sbM (6b) von Bauteilen wurde eine UV-Bestrahlungskammer verwendet, die innen verspiegelt war und folgende Außen-Abmessungen hatte:

| | |
|---|---|
| Länge | 50 cm |
| Höhe | 19 cm |
| Breite | 33 cm |

Der Abstand zwischen der UV-Leuchtstofflampe und dem Substrat betrug 15 cm.
Strahlungsquelle: UV-Lampe mit 36 Watt elektrischer Leistung, Typ "Osram Puritec HNS L 36 W 2G11" mit einer Wellenlänge von 254 nm,
Osram GmbH, Steinerne Furt 62, 86167 Augsburg.

**Konditionierung der SM-Massen (6a) bzw. der sbM (6b) -Massen:** Die verwendeten Materialien wurden sämtlich vor der Verarbeitung in einem 3D-Drucker entflüchtigt, indem 100 g der Masse in einer offenen PE-Dose in einem Exsikkator 3h bei einem Vakuum von 10 mbar und Raumtemperatur (=25°C) gelagert wurden. Anschließend wurde die Masse in eine 30ml-Kartusche mit Bajonettverschluss luftfrei abgefüllt und mit einem passenden Auspress-Stempel (Kunststoffkolben) verschlossen. Die Luer-Lock Kartusche wurde dann in die vertikale Kartuschenhalterung des Vermes-Dosierventils flüssigkeitsdicht mit der Luer-Lock-Verschraubung nach unten eingeschraubt und Druck-Stempel an der Kartuschenoberseite mit 3-8 bar Druckluft beaufschlagt; der in der Kartusche befindliche Auspress-Stempel verhindert, dass die Druckluft in die zuvor evakuierte Masse gelangen kann.

**Beispiel 1 (B1):**

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 600 g/mol (PEG 600) vorgelegt und bei einer Temperatur von 45 °C 36 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

**Beispiel 2 (B2):**

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 600 g/mol (PEG 600) vorgelegt und bei einer Temperatur von 45 °C 10 g einer hydrophilen pyrogenen Kieselsäure HDK® N20 (erhältlich bei Wacker Chemie AG; analytische Daten s. Tabelle 1) und anschließend 36,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 30 min bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

### Beispiel 3 (B3):

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 600 g/mol (PEG 600) vorgelegt und bei einer Temperatur von 45 °C 70,0 g einer hydrophoben pyrogenen Kieselsäure HDK® H30RM (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

### Beispiel 4 (B4):

In einem Labormischer der Fa. PC Laborsystem GmbH mit Balkendissolver (Durchmesser Dissolverscheibe 60 mm) wurden 360,0 g eines Polyethylenglycol-Polypropylenglycol-Copolymers mit einer mittleren Molmasse Mn ca. 15000 g/mol und einer Viskosität von ca. 3000 mPas bei 50 °C (erhältlich bei der Fa. Clariant unter der Bezeichnung Polyglycol P41/3000) vorgelegt und bei einer Temperatur von 45 °C 36,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

### Beispiel 5 (B5):

In einem Labormischer der Fa. PC Laborsystem GmbH mit Balkendissolver (Durchmesser Dissolverscheibe 60 mm) wurden 360,0 g einer Mischung aus 356,0 g eines Polyethylenglycols mit einer mittleren Molmasse Mn von 600 g/mol (PEG 600) und 4,0 g eines Polyethylenglycols mit einer mittleren Molmasse Mn von 8000 g/mol (PEG 8000) vorgelegt und bei einer Temperatur von 45 °C 36,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

### Beispiel 6 (B6):

In einem Labormischer der Fa. PC Laborsystem GmbH mit Balkendissolver (Durchmesser Dissolverscheibe 60 mm) wurden 360 g eines Polypropylenglycols mit einer mittleren Molmasse Mn von 2000 g/mol (PPG 2000) vorgelegt und bei einer Temperatur von 45 °C 90,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 2 zusammengefaßt sind.

### Beispiel 7 (B7):

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 600 g/mol (PEG 600) vorgelegt und bei einer Temperatur von 45 °C erst 9,0 g wasserfreies $Na_2SO_4$ und anschließend 36 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein trübes Gel erhalten, dessen analytische Daten in Tabelle 2 zusammengefaßt sind.

**Beispiel 8 (B8):**

In einem Labormischer der Fa. PC Laborsystem GmbH mit Balkendissolver (Durchmesser Dissolverscheibe 60 mm) wurden 360 g eines Polypropylenglycolmonobutylethers mit einer mittleren Molmasse Mn von 2300 g/mol (erhältlich bei der Fa Clariant unter der Bezeichnung Polyglykol B01/240) vorgelegt und bei einer Temperatur von 45 °C 36 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein transparentes Gel erhalten, dessen analytische Daten in Tabelle 2 zusammengefaßt sind.

**Beispiel 9 (B9; nicht erfindungsgemäß):**

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 400 g/mol (PEG 400) vorgelegt und bei einer Temperatur von 45 °C 17,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares, weiches Gel erhalten, dessen analytische Daten in Tabelle 2 zusammengefaßt sind.

Tabelle 1

|  | HDK® H18 | HDK® H30RM | HDK® N20 |
|---|---|---|---|
| Methanolzahl | 74 | 72,5 | 0 |
| % Kohlenstoff | 4,8 | 3,8 | n.b. |
| BET-Oberfläche ($m^2/g$) | n.b. | n.b. | 201 |
| DBP-Zahl (g/100 g) | 165 | 199 | 250 |
| Rest-SiOH ($nm^{-1}$) | 0,36 | 0,27 | 1,85 |

Tabelle 2

| | Beispiel B1 | Beispiel B2 | Beispiel B3 | Beispiel B4 | Beispiel B5 | Beispiel B6 | Beispiel B7 | Beispiel B8 | Beispiel B9 |
|---|---|---|---|---|---|---|---|---|---|
| Anteil pRA (%) | 9,0 | 11,0 | 16,3 | 9,0 | 9,0 | 20,0 | 9,0 | 9,0 | 4,5 |
| Viskosität 1 s-1 (Pas) bei 25 °C | 419 | 365 | 368 | 523 | 437 | 980 | 380 | 289 | 76 |
| Viskosität 100 s-1 (Pas) bei 25 °C | 15 | 12 | 17 | 18 | 13 | 36 | 17 | 12 | 2,6 |
| $R^{90}(1000;0,01)$ (s) | 10,0 | 5,5 | 34,1 | 27,0 | 6,5 | 7,3 | 4,1 | 5,7 | 7,5 |
| $\overline{(d\eta/dt)_1/(d\eta/dt)_3}$ | 3,1 | 2,3 | 4,8 | 6,1 | 3,5 | 3,6 | 3,1 | 3,3 | 7,1 |
| G' (Pa) bei 25 °C | 33500 | 53510 | 26300 | 32600 | 26043 | 25200 | 29415 | 31500 | 2028 |
| tan δ (25 °C) | 0,0717 | 0,077 | 0,17 | 0,0977 | 0,096 | 0,0774 | 0,0773 | 0,083 | 0,069 |
| $\tau_{krit}$ (Pa) bei 25 °C | 220 | 110 | 31 | 170 | 232 | 40 | 199 | 98 | 39 |
| tan δ (75 °C) | 0,079 | 0,067 | 0,5 | 0,085 | 0,084 | 0,0705 | 0,0716 | 0,097 | n.b. |
| G' (Pa) bei 75 °C | 10764 | 11580 | 10046 | 10538 | 10167 | 10095 | 11002 | 10970 | n.b. |

**Jetting-Beispiel J1:** B1 wurde mit den in Tabelle 3 angegebenen Jetting-Düsenparametern auf einem Glas-Objektträger der Fläche 25 x 75 mm tröpfchenweise zu einer Rechteck-Spirale mit einer Wandstärke von 600 μm und einer Kantenlänge von 15 mm und einer Höhe von 10 mm abgeschieden. Der hohe Speichermodul und die Fließgrenze der SM-Masse (6a) ermöglicht eine ausgezeichnete Formstabilität der abgeschiedenen Geometrie. Es resultierte ein transparenter stabiler Gelkörper.

**Jetting-Beispiel J2:** B2 wurde mit den in Tabelle 3 angegebenen Jetting-Düsenparametern abgeschieden. Es resultierte ein transparenter stabiler Gelkörper analog J1.

**Jetting-Beispiel J3:** B3 wurde mit den in Tabelle 3 angegebenen Jetting-Düsenparametern abgeschieden. Es resultierte ein transparenter stabiler Gelkörper analog J1.

**Jetting-Beispiel J4:** B4 wurde mit den in Tabelle 3 angegebenen Jetting-Düsenparametern abgeschieden. Es resultierte ein transparenter stabiler Gelkörper analog J1.

**Jetting-Beispiel J5:** B5 wurde mit den in Tabelle 3 angegebenen Jetting-Düsenparametern abgeschieden. Es resultierte ein transparenter stabiler Gelkörper analog J1.

**Jetting-Beispiel J6:** B6 wurde mit den in Tabelle 3 angegebenen Jetting-Düsenparametern abgeschieden. Es resultierte ein transparenter stabiler Gelkörper analog J1.

**Jetting-Beispiel J7:** B8 wurde mit den in Tabelle 3 angegebenen Jetting-Düsenparametern abgeschieden. Es resultierte ein transparenter stabiler Gelkörper analog J1.

**Jetting-Beispiel J8 (nicht erfindungsgemäß):** B9 wurde mit den in Tabelle 3 angegebenen Jetting-Düsenparametern abgeschieden. Es resultierte ein transparenter labiler Gelkörper.

**Jetting-Beispiel J9:** SEMICOSIL® 810 UV 1K, eine durch UV-Licht induziert additions-vernetzende, transluzente Siliconkautschukmasse mit einer Viskosität von ca. 310.000 mPa.s (bei 0,5 s⁻¹) und einer Vulkanisathärte Shore A von 40 (erhältlich bei WACKER CHEMIE AG) wurde mit den in Tabelle 3 angegebenen Jetting-Düsenparametern auf einem Glas-Objektträger der Fläche 25 x 75 mm tröpfchenweise zu einer Rechteck-Spirale mit einer Wandstärke von 2 mm, einer Kantenlänge von 15 mm und einer Höhe von 3,5 mm abgeschieden. Die Spirale wurde in der oben beschriebenen Offline-UV-Kammer und den dort genannten Vernetzungsparametern vernetzt. Anschließend wurde nach Reinigung des Düsenkopfs bzw. der Zuleitungen und Austausch der Kartusche der Hohlraum der Spirale mit Stützmaterial B7 ausgejetted (Jetting-Düsenparameter s. Tabelle 4). Anschließend wurde nach erneuter Reinigung des Düsenkopfs bzw. der Zuleitungen und Austausch der S-M-Kartusche gegen eine Kartusche SEMICOSIL® 810 UV 1K im Deckel mit einer Dicke von 1,5 mm auf die Spirale gedruckt, wie oben beschrieben vernetzt und das Stützmaterial mit Wasser ausgewaschen.

Tabelle 3

| | Beispiel J1 | Beispiel J2 | Beispiel J3 | Beispiel J4 | Beispiel J5 | Beispiel J6 | Beispiel J7 | Beispiel J8 |
|---|---|---|---|---|---|---|---|---|
| Düsen-Durchmesser ($\mu$m) | 200 | 200 | 200 | 200 | 200 | 200 | 200 | 200 |
| Rising (ms): | 0,3 | 0,3 | 0,3 | 0,3 | 0,3 | 0,3 | 0,3 | 0,3 |
| Falling (ms): | 0,5 | 0.5 | 0,5 | 0,45 | 0,3 | 0,5 | 0,5 | 0,4 |
| Open Time (ms): | 15 | 1 | 5 | 15 | 5 | 1 | 15 | 1 |
| Needle Lift (%): | 100 | 95 | 95 | 100 | 95 | 95 | 100 | 100 |
| Delay (ms) | 25 | 25 | 25 | 25 | 25 | 25 | 25 | 25 |
| Heizung (°C): | 50 | 55 | 55 | 55 | 55 | 55 | 50 | Off |
| Kartuschen-Vordruck (bar) | 2 | 3 | 3 | 5 | 3 | 5 | 2 | 2 |
| Voxeldurchmesser ($\mu$m) | 800 | 700 | 700 | 500 | 700 | 700 | 800 | 600 |

**Tabelle 4**

| | Beispiel J9 Siliconemasse | Beispiel J9 Stützmaterial B8 |
|---|---|---|
| Düsen-Durchmesser ($\mu$m) | 200 | 200 |
| Rising (ms): | 0,3 | 0,3 |
| Falling (ms): | 0,1 | 0,5 |
| Open Time (ms): | 15 | 1 |
| Needle Lift (%): | 1 | 95 |
| Delay (ms) | 25 | 25 |
| Heizung (°C): | 40 | 55 |
| Kartuschen-Vordruck (bar) | 3,0bar | 5 |
| Voxeldurchmesser ($\mu$m) | 700 | 700 |

**Patentansprüche**

1. Verfahren zum additiven Aufbau von Formkörpern (8) durch ortsspezifische Ausbringung eines strukturbildenden Materials (sbM) = (6b), **dadurch gekennzeichnet, dass**
gleichzeitig oder zeitlich versetzt mindestens ein Stützmaterial (SM)=(6a) in Bereiche ausgebracht wird, die frei von sbM (6b) bleiben,

   wobei das Ausbringen des SM (6a) über eine Vorrichtung erfolgt, die mindestens eine Ausbringeinheit (1a) für das SM (6a) aufweist, die in
   x-, y- und z-Richtung mit einer Genauigkeit von mindestens ± 100 $\mu$m positioniert werden kann, und somit durch das ortsspezifische Ausbringen des SM (6a) sowohl in der x,y-Arbeitsebene, als auch in z-Richtung die Stützstruktur aus SM (6a) für den Formkörper (8) sukzessive aufbaut,
   mit der Maßgabe, daß das SM (6a)

      - eine strukturviskose, viskoelastische Zusammensetzung ist, enthaltend

         A) mindestens ein Polyether und

B)mindestens ein partikuläres rheologisches Additiv,
C)optional weitere Zusatzstoffe

- eine Scherviskosität von höchstens 100 Pas aufweist (gemessen bei 25°C und einer Scherrate von 100 s$^{-1}$),
- einen Strukturrelaxationsparameter von mindestens 1 s aufweist, und
- einen Speichermodul G' von mindestens 5x10$^3$ Pa aufweist,

und nach Abschluss des Aufbaus des Formkörpers (8), das SM (6a) aus dem Formkörper (8) entfernt wird, wobei die Scherviskosität, der Strukturrelaxationsparameter und das Speichermodul mittels den in der Beschreibung angegebenen Verfahren ermittelt werden.

2.  Verfahren gemäß Anspruch 1 **dadurch gekennzeichnet, dass** B) zumindest eine hydrophobe Kieselsäure enthält, mit einer Silanolgruppendichte, bestimmt mittels Säure-Base-Titration, von kleiner 1,8 Silanolgruppen pro nm$^2$.

3.  Verfahren gemäß Anspruch 1 oder 2 **dadurch gekennzeichnet, dass** B) zumindest eine hydrophobe Kieselsäure enthält mit einer Methanolzahl von mindestens 30,
    wobei die Methanolzahl der prozentuale Anteil von Methanol ist, welcher der Wasserphase zugesetzt werden muß, um vollständige Benetzung der Kieselsäure zu erreichen,
    wobei vollständige Benetzung bedeutet ein vollständiges Einsinken der Kieselsäure in der Wasser-Methanol-Testflüssigkeit.

4.  Verfahren gemäß einem der Ansprüche 1 bis 3 **dadurch gekennzeichnet, dass** das SM (6a) vom Formkörper (8) mechanisch oder durch Lösen in einem Lösungsmittel entfernt wird.

**Claims**

1.  Process for the additive manufacturing of mouldings (8) via site-specific delivery of a structure-forming material (sfm) = (6b), **characterized in that** simultaneously or at staggered intervals at least one supportive material (sm) = (6a) is delivered into regions which remain free from sfm (6b),

    where the delivery of the sm (6a) is achieved by way of a device which has at least one delivery unit (1a) for the sm (6a), where the said unit can be positioned in x-, y- and z-direction with a precision of at least $\pm$ 100 $\mu$m, and thus via the site-specific delivery of the sm (6a) not only in the x, y-operating plane, but also in the z-direction successively constructs the supportive structure made of sm (6a) for the moulding (8),

    with the proviso that the sm (6a)

    - is a pseudoplastic, viscoelastic composition comprising

        A) at least one polyether and
        B) at least one particulate rheological additive,
        C) optionally other additional substances

    - has a shear viscosity of at most 100 Pas (measured at 25°C with shear rate 100 s$^{-1}$),
    - a structural relaxation parameter of at least 1 s, and
    - has a storage modulus G' of at least $5 \times 10^3$ Pa,

    and once the manufacturing of the moulding (8) has been concluded the sm (6a) is removed from the moulding (8), where the shear viscosity, the structural relaxation parameter and the storage modulus are determined by means of the method specified in the description.

2.  Process according to Claim 1, **characterized in that** B) comprises at least one hydrophobic silica with silanol group density, determined by means of acid-base titration, smaller than 1.8 silanol groups per nm$^2$.

3.  Process according to Claim 1 or 2, **characterized in that** B) comprises at least one hydrophobic silica with methanol number at least 30,
    where the methanol number is the percentage proportion of methanol that has to be added to the aqueous phase in order to achieve complete wetting of the silica,
where the expression complete wetting means that all of the silica sinks in the water-methanol test liquid.

4. Process according to any of Claims 1 to 3, **characterized in that** the sm (6a) of the moulding (8) is removed mechanically or via dissolution in a solvent.

**Revendications**

1. Procédé de formation additive de corps moulés (8) par application spécifique au site d'un matériau structurant (sbM) = (6b), **caractérisé en ce que** au moins un matériau support (SM) = (6a) est appliqué simultanément ou en décalage dans le temps dans des zones qui restent exemptes de sbM (6b),
l'application de SM (6a) ayant lieu par un dispositif qui comprend au moins une unité d'application (1a) pour SM (6a), qui peut être positionnée dans les directions x, y et z avec une précision d'au moins $\pm$ 100 $\mu$m, et qui forme ainsi successivement la structure support de SM (6a) pour le corps moulé (8) par application spécifique au site de SM (6a) aussi bien dans le plan de travail x,y que dans la direction z,
à condition que SM (6a)

   - soit une composition viscoélastique à viscosité intrinsèque, contenant :

     A) au moins un polyéther et
     B) au moins un additif rhéologique particulaire,
     C) éventuellement d'autres additifs,

   - présente une viscosité sous cisaillement d'au plus 100 Pas (mesurée à 25 °C et à un taux de cisaillement de 100 s$^{-1}$),
   - présente un paramètre de relaxation de la structure d'au moins 1 s, et
   - présente un module de mémoire G' d'au moins 5 x 10$^3$ Pa,

et SM (6a) est extrait du corps moulé (8) après la fin de la formation du corps moulé (8),
la viscosité sous cisaillement, le paramètre de relaxation de la structure et le module de mémoire étant déterminés par les procédés indiqués dans la description.

2. Procédé selon la revendication 1, **caractérisé en ce que** B) contient au moins une silice hydrophobe, ayant une densité de groupes silanol, déterminée par titrage acide-base, inférieure à 1,8 groupe silanol par nm$^2$.

3. Procédé selon la revendication 1 ou 2, **caractérisé en ce que** B) contient au moins une silice hydrophobe ayant un indice de méthanol d'au moins 30,
l'indice de méthanol étant la proportion en pourcentages de méthanol qui doit être ajouté à la phase aqueuse pour obtenir un mouillage complet de la silice,
un mouillage complet signifiant un enfoncement complet de la silice dans le liquide d'essai eau-méthanol.

4. Procédé selon l'une quelconque des revendications 1 à 3, **caractérisé en ce que** SM (6a) est extrait du corps moulé (8) mécaniquement ou par dissolution dans un solvant.

Abbildung 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150028523 A1
- US 20130337277 A1
- US 7368484 B

- EP 686676 B1
- EP 1433749 A1
- DE 102013226494 A1

**In der Beschreibung aufgeführte Nicht-Patentliteratur**

- **A. GEBHARDT.** Generative Fertigungsverfahren. Carl Hanser Verlag, 2013
- **G.W. SEARS.** *Anal. Chem.,* 1956, vol. 28, 1981

- **T. MEZGER, G.** The Rheology Handbook. Vincentz Network GmbH & Co. KG, 2006, 147ff
- **G. W. SEARS et al.** *Analytical Chemistry,* 1956, vol. 28, 1981ff